Europäisches Patentamt

European Patent Office

Office européen des brevets

(11) Publication number: **0 183 510 B1**

# EUROPEAN PATENT SPECIFICATION

(45) Date of publication of patent specification: **21.08.91**     (51) Int. Cl.⁵: **F16L 19/06, F16L 23/00**

(21) Application number: **85308550.4**

(22) Date of filing: **25.11.85**

(54) A fitting for clamping a pipe.

(30) Priority: **26.11.84 US 674789**

(43) Date of publication of application:
**04.06.86 Bulletin 86/23**

(45) Publication of the grant of the patent:
**21.08.91 Bulletin 91/34**

(84) Designated Contracting States:
**DE FR GB IT**

(56) References cited:
**BE-A- 494 392**
**FR-A- 2 095 625**
**GB-A- 490 115**

(73) Proprietor: **Perea, José Alex, Jr.**
**7949 Wistful Vista**
**Santee California 92071(US)**

(72) Inventor: **Perea, José Alex, Jr.**
**7949 Wistful Vista**
**Santee California 92071(US)**

(74) Representative: **Howden, Christopher Andrew**
**et al**
**FORRESTER & BOEHMERT Widenmayer-**
**strasse 4/I**
**W-8000 München 22(DE)**

## Description

The present invention relates to a fitting for clamping a pipe, and particularly to high-pressure pipe fittings which may be installed without the use of heat or open flame.

It is frequently necessary to make repairs to ruptured or leaking high pressure pipes in areas of extreme explosion or fire hazard, such as the engine rooms of ships or in refineries. Typically, such repairs consist of replacing a defective section of pipe with a new section either by directly welding the new section in place or by bolting expansion joints between welded flanges at both ends of the new section and welded flanges at the open ends of the pipeline where the damaged section was removed. In either case, on-site welding is necessary, and the areas to be worked must be freed of all flammable gases and liquids. For welding operations in new ships or new refineries, it is usually neither difficult nor costly to comply with this mandate. However, the process of "gas freeing" the engine room of an operating ship or a particular sector of a refinery is normally a costly and lengthy process.

It would be highly advantageous to be able to effect the reliable flanging or coupling of large-diameter, high-pressure pipes without the use of heat or flame.

Flexible couplings for joining plain-end tubes or pipes are available from several manufacturers. Typically, such couplings comprise a tubular housing into which a tube or pipe is inserted at either end. Circular resilient seals are then clamped to seal the gaps between the housing and the tubes or pipes. Although a joint made with this type of coupling lacks the reliability and durability of a welded joint or an expansion joint between two welded flanges, it does have the advatage of simplicity of installation without the use of heat or flame.

Numerous pipe fittings and connectors are currently available. For example US-A-2,011,433, teaches the construction of a pipe coupling, especially useful for joining sections of thin-wall tubing, in which complementary frusto-conical surfaces are used to secure a tight joint without the use of gaskets or packing. However, the joint necessarily reduces the inside diameter of the pipe and also deforms the ends of the sections of tubing to be joined. US-A-1,821,863 and US-A-1,821,865 teach the use of a tapered seal to provide fluid-tight joints. However, the method disclosed in those Patents requires that the ends of the pipes to be joined be fitted with specially-designed flanges, which presumably must be welded to the ends of the pipes. US-A-3,749,426, teaches the use of a pipe joint seal in the form of a tubular member having beveled ends, which is compressed between the recesses of aligned flanged pipes connected together under stressed conditions, such as with bolts, studs or clamps. Once again, however, the special flange must be welded to the ends of the pipes to be joined.

Thus, there is a very real commercial need for a pipe fitting which can be tightly secured to the end of a rigid-wall, high-pressure pipe so that it may be flanged or coupled without the use of welding.

GB-A-490115 discloses a pipe fitting comprising a generally cylindrical union including a longitudinal interior passage having an inner, constant diameter portion sized to receive the end of a pipe and an outer tapering portion tapering to the constant diameter portion from a larger diameter extremity to define a frusto-conical cavity, a ferrule, including a constant diameter inner surface sized to slide onto the pipe in a close-fitting relationship and having a tapered exterior surface complemental to the tapered portion of the longitudinal passage in the union, the ferrule being slidable into the frusto-conical cavity of the union in close fitting relationship.

The fitting of GB-A-490115 includes a nut having an internal passage sized to slide over the pipe but not over the outer end of the ferrule, the nut having an internally threaded peripheral part which receives a correspondingly externally threaded end part of the union, whereby the nut can be screwed up on the union to force the ferrule axially into the frusto-conical cavity of the union, producing a wedging action to force the ferrule radially inwardly to grip the pipe. However, in the fitting of GB-A-490115 the axial position of the nut relative to the union is dependent on the force with which the nut is screwed up onto the union and there is no means for compensation for variation in tolerances. Accordingly, it is impossible for the nut to clamp into a fixed relationship with the union to effect a leakproof seal in which relative motion between the tubing and the union is reliably prevented.

The fitting of GB-A-490115 includes a thread around the union which mates with a thread in the nut to secure the union to the tube being clamped. This arrangement is mechanically weak and is not capable of generating sufficient clamping force to provide a leakproof seal under high pressure, and it is clear that GB-A-490115 does not contemplate a particularly tight fit and the device disclosed in GB-A-490115 is not able to prevent relative motion between the pipe and the union or to provide a seal which is leakproof at high pressure.

BE-A-494392 discloses a pipe joint in which a pipe end is received within a partially split externally conical collet which in turn is received within a correspondingly conical passage through flanged member which, in use, is pulled towards a corresponding flange of a further member carrying another pipe, by a plurality of clamping bolts passed through holes in the two flanges. Once again, however, in the fully assembled pipe joint, the collet or ferrule absorbs the entire axial clamping force, so that the pipe joint is not able reliably to prevent relative motion between the pipe and the remainder of the pipe joint.

It is an object of the present invention to provide a pipe fitting for clamping to a rigid pipe and which is capable of forming a weldless, high pressure, leakproof connection with a pipe and of securing the pipe relative to the fitting so that relative movement between the pipe and the fitting is reliably prevented.

According to the invention there is provided a fitting for clamping to a rigid pipe and comprising: a rigid, generally cylindrical collar including a longitudinal interior opening having a tapered portion and a constant diameter portion, the constant diameter portion being sized to slide onto the pipe in close-fitting, non-galling relationship, the tapered portion tapering from the constant diameter portion to a larger diameter extremity to define a frusto-conical cavity, a frusto-conical locking sleeve including a constant diameter inner surface sized to slide onto the pipe in close-fitting, non-galling relationship and further including a tapered exterior surface complemental to the tapered portion of the collar and slidable into the frusto-conical cavity of the collar in close-fitting relationship; an annular locking member including an constant diameter interior opening sized to slide onto the pipe and means for drawing said annular locking member and said collar towards one another, to press the sleeve forcibly into the frusto-conical cavity of the collar and compress the sleeve against the pipe, thereby tightly sealing the pipe to the collar; the fitting being characterised in that said collar further includes a circumferential collar flange and said annular locking member is an annular locking flange with said constant diameter interior opening therein being sized to slide onto the pipe in close-fitting, non-galling relationship; the collar flange having a plurality of bolt holes circumferentially spaced around the opening in the collar and generally parallel thereto, the annular locking flange having bolt holes circumferentially spaced around the opening in the locking flange and in register with the bolt holes in the collar flange, and a plurality of bolts each extended through a respective bolt hole in the locking flange 13 and a respective bolt hole in the collar flange, said bolts being operative to urge said flanges together axially to clamp the locking flange forcibly against the collar whereby the locking flange is pressed tightly against the sleeve to urge the sleeve forcibly into the frusto-conical cavity of the collar and compress the sleeve against the pipe, thereby tightly sealing the pipe to the collar and clamping the locking flange in fixed relationship to the collar whereby relative movement between the pipe and the collar is prevented, the tapered surface of the locking sleeve being longer than the tapered surface of the collar, whereby a portion of the locking sleeve protrudes from the collar after the locking ring has been slidably disposed within the collar but prior to the application of force to the locking sleeve by the flange, said locking flange having a recessed channel extending around said opening, an annular shim being located in said recessed channel, said shim being compressed between said locking flange and said frusto-conical locking sleeve when said locking flange is clamped in abutting relation with said collar flange.

The invention is particularly suitable for use in connection of high pressure pipes etc.

The invention has been found to provide a means for flanging and coupling high-pressure, rigid-wall pipes without the use of heat or flame so that the flanging or coupling process may be carried out under conditions where "gas freeing" would otherwise be essential were welding used in the operation.

The invention has also been found to provide a pipe fitting which neither visibly deforms nor reduces the inside diameter of the pipeline.

The present invention may be used to flange or couple rigid-wall pipes of any diameter. On a three-inch pipe, the fitting has been tested to withstand pressures of 372 kgs per $cm^2$.

In order that the invention may be more readily understood, and so that further features thereof may be appreciated, embodiments of the invention will now be described by way of example, with reference to the accompanying drawings, in which:

FIGURE 1 is a cross-sectional view of a pair of identical connector flange assemblies, each of which incorporates a weldless high-pressure fitting of the invention, connected by means of a commercially-available expansion joint, the outline of which is shown by broken lines;

FIGURE 2 is a view taken along the line 2-2 in Figure 1, showing a connector flange assembly mounted on a pipe;

FIGURE 3 is a second embodiment of the invention showing the joining of two pipes by means of a coupling which incorporates two weldless high-pressure fittings; and

FIGURE 4 is a view taken along the line 4-4 showing a circular

locking flange with a circular recess.

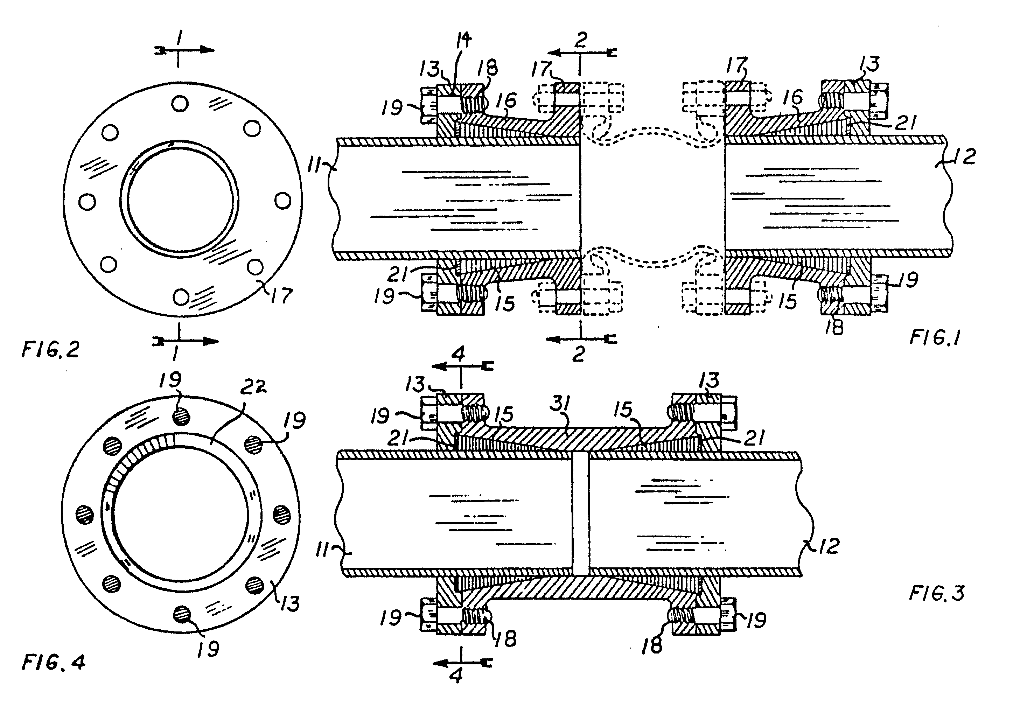

Referring now to Figure 1, two sections of pipe 11 and 12 are shown connected by means of a commercially-available expansion joint bolted to a pair of connector flange assemblies constructed in accordance with the present invention. Each flange assembly comprises a generally circular locking flange 13 having a constant inside diameter closely sized to enable it to slide over the end of the pipe 11 without galling and has a first series of holes 14 arranged in a radial pattern. In use, each locking flange 13 is arranged to cooperate with a generally tubular deformable locking ring 15. Again, the tubular deformable locking ring 15 has an inside diameter closely sized to enable it to slide over the end of a pipe 11 without galling. The outer surface of the locking ring tapers form a frusto-conical section. The locking ring 15 is mounted on the pipe 11 so that the thickest edge of the ring is adjacent the locking flange 13. A rigid collar 16, incorporating an outwardly extending connector flange 17, has a tapered frusto-conical inner surface which mates with the frusto-conical outer surface of the locking ring 15 when the collar 16 is slid over the end of the pipe 11. The collar 16 has a second series of threaded holes 18, formed in a flange portion spaced from the connector flange 17, the holes 18 being arranged in a circular pattern identical to the hole pattern of locking flange 13.

Whilst the connector flange 17 is illustrated connected with a commercially available expansion joint, the flange may be adapted for connection to any suitable fixture.

When the fitting is initially assembled, the thickest edge of the tapered locking ring 15 annularly protrudes from the collar 16. Upon assembly, the lacking flange 13 is bolted against the collar 16 by means of a series of bolts 19, each of which is inserted through a hole 14 and tightened in a correspondingly positioned threaded hole 18. When the bolts 19 are tightened, the annularly protruding edge of the sealing ring 15 is forced deeper into the tapered recess formed by the outer surface of the pipe 11 and the tapered inner surface of the collar 16, thus locking and sealing the collar 16 in a fixed position on the pipe 11. The amount which the sealing ring 15 is forced into the tapered recess is determined by the thickness of a circular shim 21 which is placed between the locking flange 13 and the

## Claims

1. A fitting for clamping to a rigid pipe (11) and comprising: a rigid, generally cylindrical collar (16) including a longitudinal interior opening having a tapered portion and a constant diameter portion, the constant diameter portion being sized to slide onto the pipe (11) in close-fitting, non-galling relationship, the tapered portion tapering from the constant diameter portion to a larger diameter extremity to define a frusto-conical cavity, a frusto-conical locking sleeve (15) including a constant diameter inner surface sized to slide onto the pipe (11) in close-fitting, non-galling relationship and further including a tapered exterior surface complemental to the tapered portion of the collar and slidable into the frusto-conical cavity of the collar in close-fitting relationship; an annular locking member (13) including an constant diameter interior opening sized to slide onto the pipe and means (19) for drawing said annular locking member (13) and said collar (16) towards one another, to press the sleeve (15) forcibly into the frusto-conical cavity of the collar (16) and compress the sleeve (15) against the pipe (11), thereby tightly sealing the pipe to the collar; the fitting being characterised in that said collar (16) further includes a circumferential collar flange and said annular locking member is an annular locking flange (13) with said constant diameter interior opening therein being sized to slide onto the pipe (11) in close-fitting, non-galling relationship; the collar flange having a plurality of bolt holes circumferentially spaced around the opening in the collar and generally parallel thereto, the annular locking flange (13) having bolt holes (14) circumferentially spaced around the opening in the locking flange (13) and in register with the bolt holes in the collar flange, and a plurality of bolts (19) each extended through a respective bolt hole in the locking flange 13 and a respective bolt hole in the collar flange, said bolts being operative to urge said flanges together axially to clamp the locking flange forcibly against the collar whereby the locking flange is pressed tightly against the sleeve (15) to urge the sleeve forcibly into the frusto-conical cavity of the collar and compress the sleeve against the pipe, thereby tightly sealing the pipe to the collar and clamping the locking flange in fixed relationship to the collar whereby relative movement between the pipe and the collar is prevented, the tapered surface of the locking sleeve (15) being longer than the tapered surface of the collar (16), whereby a portion of the locking sleeve protrudes from the collar after the locking ring has been slidably disposed within the collar but prior to the application of force to the locking sleeve by the flange, said locking flange having a recessed channel (22) extending around said opening, an annular shim (21) being located in said recessed channel, said shim being compressed between said locking flange (13) and said frusto-conical locking sleeve (15) when said locking flange (13) is clamped in abutting relation with said collar flange.

## Revendications

1. Un raccord de bridage à un tuyau rigide (11) et comprenant: une virole rigide de forme générale cylindrique (16) munie d'une ouverture intérieure longitudinale présentant une partie conique et une partie de diamètre constant, la partie de diamètre constant étant dimensionnée pour glisser sur le tube (11) de façon étroitement ajustée et non agressive, la partie conique s'évasant à partir de la partie de diamètre constant vers une extrémité de diamètre plus important de façon à définir une cavité tronconique, un manchon tronconique de blocage (15) muni d'une surface intérieure de diamètre constant, dimensionné de façon à glisser sur le tube (11) de manière étroitement ajustée et non agressive et comportant en outre une surface extérieure conique complémentaire de la partie conique de la virole et susceptible de glisser dans la cavité tronconique de la virole de façon étroitement ajustée; un organe annulaire de blocage (13) muni d'une ouverture intérieure de diamètre constant, dimensionnée pour glisser sur le tube et des moyens (19) pour tirer l'un vers l'autre ledit organe annulaire de blocage (13) et ladite virole (16), afin de presser à force le manchon (15) dans la cavité tronconique de la virole (16) et de comprimer le manchon (15) sur le tube (11), de manière à étancher fermement le tube sur la virole; le raccord étant caractérisé en ce que ladite virole (16) comporte en outre un flasque circonférentiel de virole et en ce que ledit organe annulaire de blocage est un flasque annulaire de blocage (13) dont l'ouverture intérieure de diamètre constant prévue à l'intérieur est dimensionnée pour glisser sur le tube (11) de façon étroitement ajustée et non agressive; le flasque de virole présentant une pluralité de trous de boulons espacés circonférentiellement autour de l'ouverture de la virole et parallèle d'une façon générale à cette ouverture, le flasque annulaire de blocage (13) comportant des trous de boulons (14) espacés circonférentiellement autour de l'ouverture dans le flasque de blocage (13) et correspondant aux trous de boulons dans le flasque de virole, et une pluralité de boulons (19) se prolongeant chacun à travers un trou de boulon correspondant dans le flasque de blocage (13) et un trou de boulon correspondant dans le flasque de virole, lesdits boulons étant aptes à solliciter lesdits flasques ensemble axialement afin de pincer le flasque de blocage à force sur la virole, de manière que le flasque de blocage soit pressé étroitement sur le manchon (15) afin de repousser à force le manchon (15) dans la cavité tronconique de la virole et de comprimer le manchon sur le tube, de manière à presser hermétiquement le tube sur la virole et à pincer le flasque de blocage en position fixe par rapport à la virole de manière à éviter un déplacement relatif entre le tube et la virole, la surface conique du manchon de blocage (15) étant plus longue que la surface conique de la virole (16), de manière qu'une partie du manchon de blocage fasse saillie hors de la virole après que l'anneau de blocage ait été disposé de façon glissante à l'intérieur de la virole mais avant l'application à force du manchon de blocage par le flasque, ledit flasque de blocage comportant un canal en creux (22) s'étendant autour de ladite ouverture, une rondelle annulaire de calage (21) étant disposée dans ledit canal en creux, ladite rondelle étant comprimée entre ledit flasque de blocage (13) et ledit manchon de blocage tronconique (15) lorsque ledit flasque de blocage (13) est pincé en butée sur ledit flasque de virole.

## Patentansprüche

1. Rohrverbindung zum Anklemmen an ein starres Rohr (11), mit einem starren, im wesentlichen zylindrischen Kragen (16), der mit einer longitudinalen, mit einem konischen Abschnitt und einem einen gleichbleibenden Durchmesser aufweisenden Abschnitt versehenen Innenöffnung versehen ist, wobei der einen gleichbleibenden Durchmesser aufweisende Abschnitt eine solche Größe hat, daß er auf dem Rohr in enger Passung ungehindert gleitet, und der konische Abschnitt sich von dem Abschnitt mit konstantem Durchmesser hin zu einer Extremität mit größerem Durchmesser unter Bildung einer kegelstumpfförmigen Höhlung erweitert, einer kegelstumpfförmigen Verschlußmuffe (15) mit einer Innenfläche mit gleichbleibendem Durchmesser, der ein ungehindertes Gleiten der Muffe in enger Passung auf dem Rohr erlaubt, und weiter mit einer konisch verlaufenden, zu dem konischen Abschnitt des Kragens komplementären, in die kegelstumpfförmige Höhlung des Kragens in enger Passung gleitenden, konischen Außenfläche, einem ringförmigen Verschlußelement (13) mit einer Innenöffnung, die ein Gleiten auf dem Rohr erlaubt, und Mitteln (19) zum Ziehen des ringförmigen Verschlußelements (13 und des Kragens (16) aneinander, gewaltsamen Pressen der Muffe (15) in die kegelstumpfförmige Höhlung des Kragens (16) und Drücken der Muffe (15) gegen das Rohr (11), wodurch das Rohr mit dem Kragen abgedichtet wird, dadurch gekennzeichnet, daß der Kragen (16) weiter einen umlaufenden Kragenflansch aufweist und das ringförmige Verschlußelement ein ringförmiger Verschlußflansch (13) ist, dessen mit einem gleichbleibenden Durchmesser versehene Innenöffnung eine Größe hat, die ein unbehindertes Gleiten in enger Passung auf dem Rohr (11) ermöglicht, der Kragenflansch eine Mehrzahl von mit Abstand voneinander um die Öffnung des Kragen herum angeordnete, im wesentlichen parallel zu diesem verlaufende Bolzenbohrungen aufweist, der ringförmige Verschlußflansch (13) mit Abstand voneinander um die Öffnung in dem Verschlußflansch herum in Ausrichtung mit den Bolzenbohrungen in dem Kragenflansch angeordnete Bolzenbohrungen (14) aufweist, und eine Mehrzahl von Bolzen (19) vorgesehen sind, die sich jeweils durch eine Bolzenbohrung in dem Verschlußflansch (13) und eine Bolzenbohrung in dem Kragenflansch erstrecken, wobei die Bolzen die Flansche axial zum gewaltsamen Klemmen des Verschlußflansches gegen den Kragen zwingen, wodurch der Verschlußflansch dicht gegen die Muffe (15) gedrückt wird, um die Muffe gewaltsam in die kegelstumpfförmige Höhlung des Kragens zu zwingen und die Muffe gegen das Rohr zusammenzudrücken und so das Rohr gegen den Kragen abzudichten und den Verschlußflansch in einer festen Beziehung mit dem Kragen zu klemmen, wodurch eine Relativbewegung zwischen dem Rohr und dem Kragen verhindert wird, und wobei der konische Abschnitt der Verschlußmuffe (15) länger ist als der konische Abschnitt des Kragens (16), wodurch ein Abschnitt der Verschlußmuffe über den Kragen hinausragt, nachdem der Verschlußring gleitbar in den Kragen eingesetzt ist, aber bevor Kraft auf die Verschlußmuffe über den Flansch aufgebracht wird, wobei der Verschlußflansch einen vertieften, um die Öffnung herumlaufenden Kanal (22) hat, und eine Zwischenlegscheibe (21) in dem vertieften Kanal angeordnet ist, die zwischen dem Verschlußflansch (13) und der kegelstumpfförmigen Verschlußmuffe (15) zusammengedrückt wird, wenn der Verschlußflansch (13) bei Anstoßen an den Kragenflansch eingeklemmt ist.

FIG. 2

FIG. 4

FIG. 1

FIG. 3

EP 0 183 510 B1